# EUROPEAN PATENT APPLICATION

(11) **EP 3 327 638 A1**
(43) Date of publication of application: **30.05.2018**
(21) Application number: 17193936.6
(22) Date of filing: 29.09.2017
(51) Int. Cl.: G06Q 10/00

(54) **INFORMATION PROCESSING APPARATUS, SYSTEM, METHOD, AND PROGRAM FOR NOTIFYING A MALFUNCTIONING APPARATUS**

(30) Priority: 29.11.2016 JP 2016231669
(71) Applicant: Omron Corporation, Kyoto-shi, Kyoto 600-8530 (JP)
(72) Inventor: ISHIHARA, Hiromi, Kyoto-shi, Kyoto 600-8530 (JP); KANESHIGE, Naruhiko, Kyoto-shi, Kyoto 600-8530 (JP); KAWAKAMI, Fumio, Kyoto-shi, Kyoto 600-8530 (JP)
(74) Representative: Horn Kleimann Waitzhofer Patentanwälte PartG mbB

(57) **Abstract**

Provided is an information processing apparatus able to more quickly deal with a malfunction than previously possible. The information processing apparatus includes a communication unit capable of communicating with a plurality of mobile communication terminals, a detection unit that detects an event indicating a phenomenon that has occurred in a production apparatus, a first determination unit that determines mobile communication terminals associated with the event to be notified, as notification destination candidates, based on event information defining, for every type of event, mobile communication terminals to be notification destinations, an acquisition unit that acquires the current position of each mobile communication terminal that is a notification destination candidate, a calculation unit that calculates a time period for each mobile communication terminal that is a notification destination candidate to reach the production apparatus, based on the current position of the mobile communication terminal and an installation position of the production apparatus, and a second determination unit that determines a mobile communication terminal whose calculated first time period is relatively short, as a notification destination of the event to be notified, from among the mobile communication terminals that are the notification destination candidates.

## Description

### CROSS-REFERENCES TO RELATED APPLICATIONS

This application claims priority to Japanese Patent Application No. 2016-231669 filed November 29, 2016, the entire contents of which are incorporated herein by reference.

### FIELD

This disclosure relates to a technology for determining the notification destination of an event.

### BACKGROUND

In the field of FA (Factory Automation), in the case where a product production apparatus malfunctions, a repair person repairs the production apparatus. Since specialist knowledge is required to repair a production apparatus, the repair person who can deal with the situation differs depending on the type of production apparatus and the type of malfunction. In recent years, a technology for notifying the malfunction of a production apparatus to a suitable repair person has been developed.

In relation to this technology, JP 2001-117629 (Patent Document 1) discloses an event notification system "that detects the occurrence of predetermined events (various types of phenomena such as malfunction occurrence) from the state of a management system, and notifies events quickly and precisely utilizing e-mail". This event notification system transmits an e-mail message to a repair person that depends on the type of event.

JP 2001-117629A is an example of background art.

It is desirable to quickly deal with the malfunction of a production apparatus. In the case where there are a plurality of repair persons who can deal with the malfunction of the production apparatus, it is preferable to notify the occurrence of the event to a repair person who is near the production apparatus. The repair person can thereby quickly repair the production apparatus. Because the event notification system disclosed in Patent Document 1 does not notify the event to a repair person who is near the production apparatus, the malfunction of the production apparatus cannot be dealt with quickly. Accordingly, a technology for quickly dealing with the malfunction of a production apparatus is desired.

### SUMMARY

According to one aspect, an information processing apparatus includes a communication unit configured to communicate with a plurality of mobile communication terminals, detection unit for detecting an event indicating a phenomenon that has occurred in a production apparatus, a first determination unit for determining, in a case where an event to be notified is detected by the detection unit, mobile communication terminals that are associated with the event to be notified, as notification destination candidates, from among the plurality of mobile communication terminals, based on event information defining, for every type of event, mobile communication terminals that are to be notification destinations of the event, an acquisition unit for acquiring a current position of each of the mobile communication terminals that are the notification destination candidates, a calculation unit for calculating a first time period for each of the mobile communication terminals that are the notification destination candidates to reach the production apparatus, based on the respective current positions of the mobile communication terminals that are the notification destination candidates and an installation position of the production apparatus, and a second determination unit for determining a mobile communication terminal whose calculated first time period is relatively short, as a notification destination of the event to be notified, from among the mobile communication terminals that are the notification destination candidates.

Preferably, the second determination unit determines a mobile communication terminal whose calculated first time period is shortest as the notification destination, from among the mobile communication terminals that are the notification destination candidates.

Preferably, a via point is further associated with at least one event defined in the event information. Also, preferably, the calculation unit, in a case where the via point is not associated with the event to be notified, calculates the first time period, and, in a case where the via point is associated with the event to be notified, calculates a second time period for each of the mobile communication terminals that are the notification destination candidates to reach the production apparatus via the via point, based on the respective current positions of the mobile communication terminals that are the notification destination candidates and the via point. Furthermore, preferably, the second determination unit, in a case where the via point is not associated with the event to be notified, determines a mobile communication terminal whose calculated first time period is relatively short as the notification destination, from among the mobile communication terminals that are the notification destination candidates, and, in a case where the via point is associated with the event to be notified, determines a mobile communication terminal whose calculated second time period is relatively short as the notification destination.

Preferably, the event information further defines a contact number of a repair person for every type of event. Also, preferably, the communication unit transmits a warning indicating that the event to be notified has occurred and the contact number associated with the event to be notified in the event information to the mobile communication terminal that is the notification destination.

Preferably, the calculation unit further calculates a first time period for each of the mobile communication terminals that are other than the notification destination candidates to reach the production apparatus, out of the plurality of mobile communication terminals, based on the respective current positions of the mobile communication terminals that are other than the notification destination candidates and the installation position of the production apparatus. Also, preferably, the communication unit specifies a mobile communication terminal whose calculated first time period is relatively short, from among the plurality of mobile communication terminals that include the mobile communication terminals that are other than the notification destination candidates, and, in a case where the specified mobile communication terminal is a mobile communication terminal that is other than the notification destination candidates, transmits the contact number of the specified mobile communication terminal to the mobile communication terminal that is the notification destination.

According to another aspect, an information processing system including an information processing apparatus includes a communication unit configured to communicate with a plurality of mobile communication terminals, a detection unit for detecting an event indicating a phenomenon that has occurred in a production apparatus, a first determination unit for determining, in a case where an event to be notified is detected by the detection unit, mobile communication terminals that are associated with the event to be notified, as notification destination candidates, from among the plurality of mobile communication terminals, based on event information defining, for every type of event, mobile communication terminals that are to be notification destinations of the event, an acquisition unit for acquiring a current position of each of the mobile communication terminals that are the notification destination candidates, a calculation unit for calculating a time period for each of the mobile communication terminals that are the notification destination candidates to reach the production apparatus, based on the respective current positions of the mobile communication terminals that are the notification destination candidates and an installation position of the production apparatus, and a second determination unit for determining a mobile communication terminal whose calculated time period is relatively short, as a notification destination of the event to be notified, from among the mobile communication terminals that are the notification destination candidates.

According to another aspect, an information processing method of an information processing apparatus configured to communicate with a plurality of mobile communication terminals includes a step of detecting an event indicating a phenomenon that has occurred in a production apparatus, a step of determining, in a case where an event to be notified is detected in the detection step, mobile communication terminals that are associated with the event to be notified, as notification destination candidates, from among the plurality of mobile communication terminals, based on event information defining, for every type of event, mobile communication terminals that are to be notification destinations of the event, a step of acquiring a current position of each of the mobile communication terminals that are the notification destination candidates, a step of calculating a time period for each of the mobile communication terminals that are the notification destination candidates to reach the production apparatus, based on the respective current positions of the mobile communication terminals that are the notification destination candidates and an installation position of the production apparatus, and a step of determining a mobile communication terminal whose calculated time period is relatively short, as a notification destination of the event to be notified, from among the mobile communication terminals that are the notification destination candidates.

According to another aspect, an information processing program that is executed by an information processing apparatus configured to communicate with a plurality of mobile communication terminals causes the information processing apparatus to execute a step of detecting an event indicating a phenomenon that has occurred in a production apparatus, a step of determining, in a case where an event to be notified is detected in the detection step, mobile communication terminals that are associated with the event to be notified, as notification destination candidates, from among the plurality of mobile communication terminals, based on event information defining, for every type of event, mobile communication terminals that are to be notification destinations of the event, a step of acquiring a current position of each of the mobile communication terminals that are the notification destination candidates, a step of calculating a time period for each of the mobile communication terminals that are the notification destination candidates to reach the production apparatus, based on the respective current positions of the mobile communication terminals that are the notification destination candidates and an installation position of the production apparatus, and a step of determining a mobile communication terminal whose calculated time period is relatively short, as a notification destination of the event to be notified, from among the mobile communication terminals that are the notification destination candidates.

In one aspect, the malfunction of a production apparatus can be dealt with more quickly than was previously possible.

The above and other objects, features, aspects and advantages of the disclosure will become apparent from the following detailed description relating to the invention, taken in conjunction with the attached drawings.

### BRIEF DESCRIPTION OF THE DRAWINGS

Fig. 1 is a schematic view showing the basic configuration of an information processing system according to a first embodiment.
Fig. 2 is a sequence diagram showing a data flow of the information processing system according to the first embodiment.
Fig. 3 is a diagram showing a data structure of event information according to the first embodiment.
Fig. 4 is a diagram showing an example of a functional configuration of a programmable display device according to the first embodiment.
Fig. 5 is a diagram showing an example of a warning screen that is displayed on a display of a mobile communication terminal according to the first embodiment.
Fig. 6 is a flowchart representing part of processing that is executed by the programmable display device according to the first embodiment.
Fig. 7 is a block diagram showing a main hardware configuration of the information processing system according to the first embodiment.
Fig. 8 is a flowchart representing part of processing that is executed by a programmable display device according to a second embodiment.
Fig. 9 is a diagram showing an example of a data structure of event information according to the second embodiment.
Fig. 10 is a diagram showing "apparatus - via point - terminal" distances representing the distance between the programmable display device and mobile communication terminals according to the second embodiment.
Fig. 11 is a diagram showing an example of a warning screen that is displayed on a display of a mobile communication terminal according to a third embodiment.
Fig. 12 is a diagram showing an example of a data structure of event information according to the third embodiment.
Fig. 13 is a diagram showing "apparatus - terminal" distances representing the distance between a programmable display device and mobile communication terminals according to a fourth embodiment.
Fig. 14 is a diagram showing an example of a warning screen that is displayed on a display of a mobile communication terminal according to the fourth embodiment.

### DETAILED DESCRIPTION

Hereinafter, embodiments according to the present invention will be described, with reference to the drawings. In the following description, the same reference signs are given to components and constituent elements that are the same. The names and functions thereof are also the same. Accordingly, detailed descriptions thereof will not be reiterated.

### First Embodiment

### A. Information processing system 1

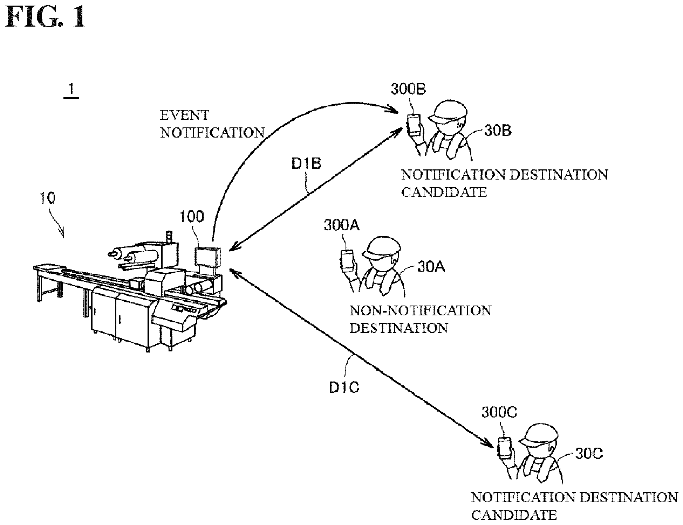

The basic configuration of an information processing system 1 according to the present embodiment will be described, with reference to Fig. 1. Fig. 1 is a schematic view showing the basic configuration of the information processing system 1 according to the present embodiment.

As shown in Fig. 1, the information processing system 1 is, for example, constituted by a production apparatus 10 and mobile communication terminals 300A to 300C. Hereinafter, "mobile communication terminal 300" will also be used to representatively refer to at least one of the mobile communication terminals 300A to 300C.

Although mobile communication terminals 300 serving as smartphones are shown in Fig. 1, the mobile communication terminals 300 are not limited to smartphones. As an example, the mobile communication terminals 300 may be tablet terminals or may be other mobile devices provided with a communication function.

The production apparatus 10 is installed in a factory or the like and produces various products. The production apparatus 10 includes a programmable display device 100. The programmable display device 100 acts as a GUI (Graphical User Interface) in an HMI (Human Machine Interface) environment. The programmable display device 100 is provided with an operation unit such as a touch panel, a display unit such as a liquid crystal display, and a communication unit for communicating with other communication terminals. The communication unit of the programmable display device 100 realizes communication with the production apparatus 10, a PLC (Programmable Logic Controller) for controlling the production apparatus 10, and the mobile communication terminals 300A to 300C of repair persons 30A to 30C, for example.

Note that although an example in which the programmable display device 100 is constituted integrally with the production apparatus 10 is shown in Fig. 1, the programmable display device 100 may be constituted separately from the production apparatus 10.

Also, although an example in which the information processing system 1 is constituted by one production apparatus 10 is shown in Fig. 1, the information processing system 1 may be constituted by a plurality of production apparatuses 10. In this case, the information processing system 1 may also further include a server capable of communicating with the plurality of production apparatuses 10.

### B. Event notification destination determination method

The programmable display device 100, by monitoring events that occur in the production apparatus 10, which is the apparatus to be monitored, monitors phenomena (e.g., malfunctions, etc.) that occur in the production apparatus 10. In the case where an event to be notified occurs in the production apparatus 10, the programmable display device 100 specifies a repair person who is capable of dealing with the malfunction that is indicated by the event. In the case where there are a plurality of repair persons capable of dealing with the malfunction, the programmable display device 100 notifies the occurrence of the event to the repair person who can reach the production apparatus 10 in the fastest time. The repair person can thereby quickly deal with the malfunction of the production apparatus 10.

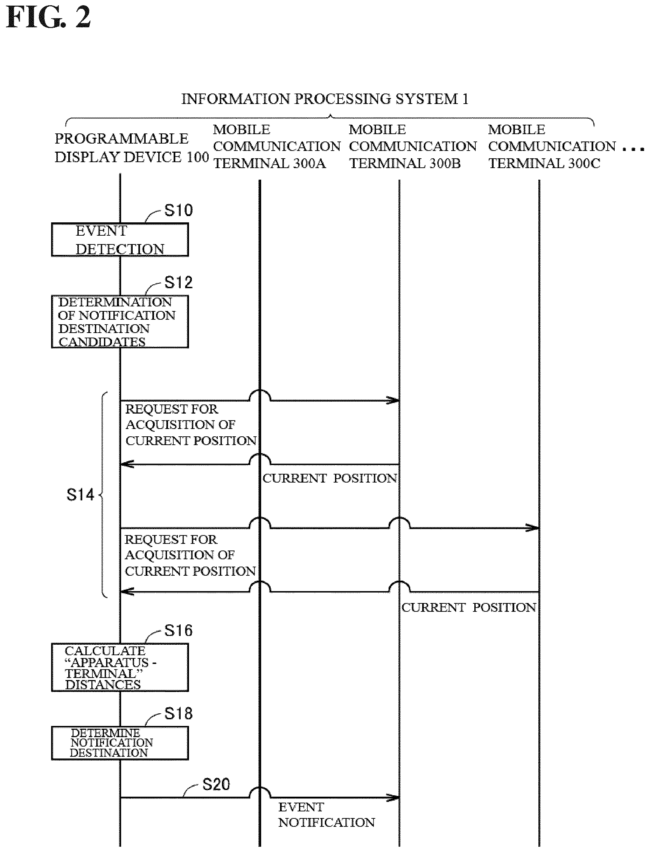

Hereinafter, a method for determining the notification destination of an event by the programmable display device 100 will be specifically described, with reference to Fig. 1 to Fig. 3. Fig. 2 is a sequence diagram showing a data flow of the information processing system 1.

In step S10, the programmable display device 100 is assumed to have detected an event to be notified. Events to be notified may be registered in advance or may be registered by a user.

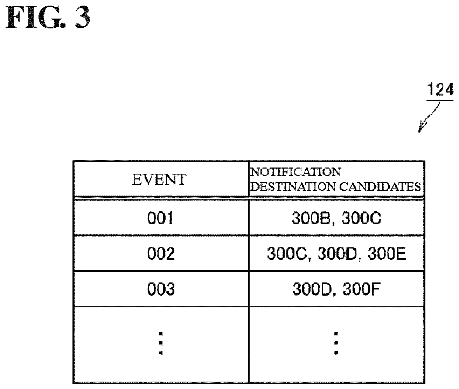

In step S12, the programmable display device 100 preliminarily determines a mobile communication terminal 300 that is to be the notification destination of the event. Hereinafter, the notification destination that is preliminarily determined is also referred to as a "notification destination candidate". As an example, a mobile communication terminal 300 that is to be a notification destination candidate is determined based on event information 124 shown in Fig. 3. Fig. 3 is a diagram showing the data structure of the event information 124.

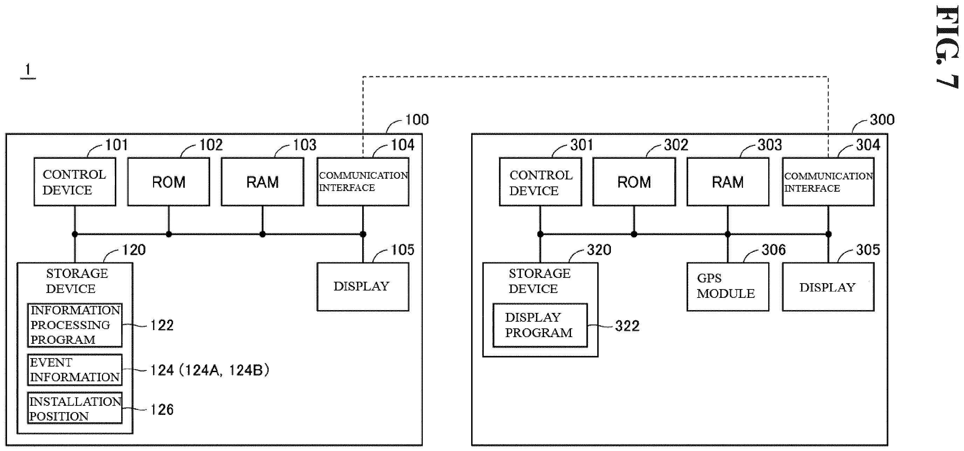

The event information 124 is, for example, stored in advance in a storage device 120 (see Fig. 7) of the programmable display device 100. In the event information 124, mobile communication terminals 300 that are to be notification destinations of an event are defined for every type of event. The programmable display device 100, in the case where an event to be notified is detected, determines the mobile communication terminals 300 that are associated with the event to be notified, as notification destination candidates, from among the communicable mobile communication terminals 300, with reference to the event information 124. As an example, in the case where an event "001" is detected, the mobile communication terminals 300B and 300C are selected as notification destination candidates.

Referring again to Fig. 2, the programmable display device 100, in step S14, acquires the current position of each mobile communication terminal determined as a notification destination candidate at step S12. For example, in the case where the mobile communication terminals 300B and 300C are notification destination candidates, the programmable display device 100 transmits an acquisition request for the current position to the mobile communication terminals 300B and 300C. The mobile communication terminal 300B transmits its own current position to the programmable display device 100, based on having received the acquisition request for the current position from the programmable display device 100. Similarly, the mobile communication terminal 300C transmits its own current position to the programmable display device 100, based on having received the acquisition request for the current position from the programmable display device 100. The current positions of the mobile communication terminals 300B and 300C are, for example, represented by latitude and longitude.

In step S16, the programmable display device 100, based on the current positions of the mobile communication terminals 300B and 300C that are notification destination candidates received at step S14 and the installation position of the production apparatus 10, calculates the time period (first time period) for each of the mobile communication terminals 300B and 300C to reach the production apparatus 10. The installation position of the production apparatus 10 may be specified in advance, or may be set at the time of installation or the like. Alternatively, in the case where the apparatus (e.g., GPS (Global Positioning System), etc.) that acquires the current position is mounted in the production apparatus 10, the programmable display device 100 may receive the installation position of the production apparatus 10 from the production apparatus 10. The installation position of the production apparatus 10 is, for example, represented by latitude and longitude.

Typically, the time period for a repair person in possession of a mobile communication terminal 300 to reach the production apparatus 10 is represented as the distance between the mobile communication terminal 300 and the production apparatus 10, but may be represented by other indices. Hereinafter, description will be given assuming that the distance between the mobile communication terminal 300 and the production apparatus 10 is employed as the index representing the length of the arrival time period.

The distance between the production apparatus 10 and the mobile communication terminal 300 is also called the "apparatus - terminal" distance. In the example in Fig. 1, the programmable display device 100 calculates an "apparatus - terminal" distance D1B from the production apparatus 10 to the mobile communication terminal 300B, and an "apparatus - terminal" distance D1C from the production apparatus 10 to the mobile communication terminal 300C. At this time, the programmable display device 100 does not calculate the "apparatus - terminal" distance for the mobile communication terminal 300A which is a non-notification destination, having not been selected as a notification destination candidate.

In step S18, the programmable display device 100 determines the mobile communication terminal 300B whose "apparatus - terminal" distance D1B is relatively short as the notification destination of the event, from among the mobile communication terminals 300B and 300C that are the notification destination candidates. Preferably, the mobile communication terminal 300 whose "apparatus - terminal" distance is shortest is determined as the notification destination. The programmable display device 100 notifies the occurrence of the event to the mobile communication terminal 300B determined as the notification destination. The mobile communication terminal 300B, upon receipt of notification of the occurrence of the event from the programmable display device 100, reports that fact to the repair person 30B (see Fig. 1). The report may be realized by display of a message or the like, or may be realized with audio or the like.

Adopting the above configuration enables the programmable display device 100 to notify the occurrence of the event to the repair person 30B who is able to reach the production apparatus 10 in the fastest time. As a result, the repair person 30B is able to quickly deal with the malfunction of the production apparatus 10. Also, because the programmable display device 100 does not transmit notification of the occurrence of the event to either the repair person 30A who is not able to deal with the malfunction of the production apparatus 10 or to the repair person 30C who is far away from the production apparatus 10, interruption to the work of the repair persons 30A and 30C can be suppressed.

Note that the programmable display device 100 does not necessarily need to determine the mobile communication terminal whose "apparatus - terminal" distance is shortest as the notification destination, and need only determine the mobile communication terminal whose "apparatus - terminal" distance is relatively short as the notification destination. As an example, the programmable display device 100 may determine the mobile communication terminal whose "apparatus - terminal" distance is shortest and the mobile communication terminal whose "apparatus - terminal" distance is the second shortest as the notification destinations of the event. Alternatively, mobile communication terminals that are within a given range from the programmable display device 100 may be determined as the notification destinations of the event. Alternatively, the programmable display device 100 may determine the mobile communication terminal that is to be the notification destination, based on not only on the "apparatus - terminal" distance but also on priorities that are set for the mobile communication terminals 300. In this case, a mobile communication terminal that has a short "apparatus - terminal" distance and a high priority is more likely to be determined as the notification destination. As an example, the programmable display device 100 divides each of the "apparatus - terminal" distances by a corresponding priority, and determines the mobile communication terminal with the smallest division result as the notification destination. In this case, the mobile communication terminal whose "apparatus - terminal" distance is shortest is not necessarily determined as the notification destination of the event.

Also, description was given above with regard to an example in which the function for determining the notification destination of an event is implemented in the programmable display device 100, but this function does not necessarily need to be implemented in the programmable display device 100, and may be implemented in another apparatus. This apparatus is, for example, the production apparatus 10, a controller (e.g., PLC, etc.) for controlling the production apparatus 10, a server constituting the information processing system 1, or other apparatus having a communication function.

Also, although description was given above with regard to the mobile communication terminal 300 that is to be the notification destination being determined based on the "apparatus - terminal" distance showing the distance between the production apparatus 10 and the mobile communication terminals 300, the "apparatus - terminal" distance may, in the case where the production apparatus 10 and the programmable display device 100 are integrally constituted, be represented by the distance between the programmable display device 100 and the communication terminals 300. That is, as long as the index is able to specify a mobile communication terminal 300 whose time period for the repair person to reach to the production apparatus 10 is short, the distance between the programmable display device 100 and the mobile communication terminal 300 or the distance between the production apparatus 10 and the mobile communication terminal 300 may be adopted as the "apparatus - terminal" distance.

### C. Functional configuration of programmable display device 100

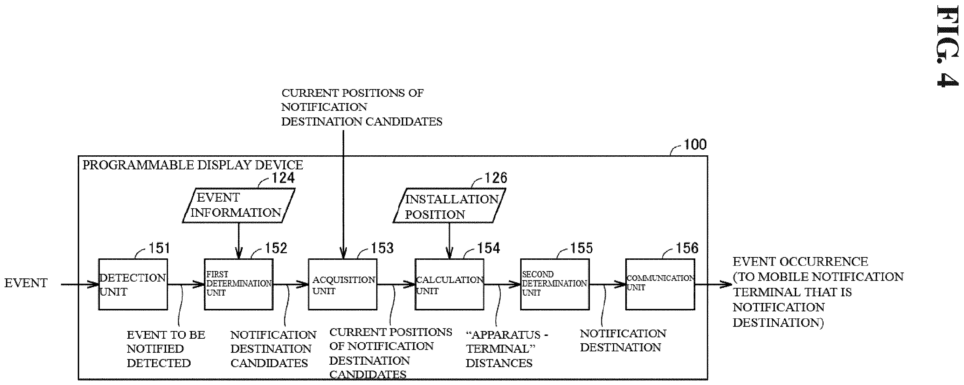

The functional configuration of the programmable display device 100 will be described, with reference to Fig. 4. Fig. 4 is a diagram showing an example of a functional configuration of the programmable display device 100.

The programmable display device 100 includes a detection unit 151, a first determination unit 152, an acquisition unit 153, a calculation unit 154, a second determination unit 155, and a communication unit 156 as a functional configuration.

The detection unit 151 monitors events that occur in the production apparatus 10 that is to be monitored, and detects events that are to be notified. More specifically, the production apparatus 10 periodically transmits an event that has occurred therein to the detection unit 151. The detection unit 151 judges whether the event is an event to be notified that was registered in advance, whenever an event is transmitted from the production apparatus 10. The detection unit 151, upon an event to be notified being detected, outputs that fact to the first determination unit 152. Events to be notified include not only phenomena that clearly indicate the malfunction of the production apparatus 10 but also phenomena that suggest the malfunction of the production apparatus 10.

The first determination unit 152, in the case where an event to be notified is detected by the detection unit 151, determines mobile communication terminals 300 associated with the event to be notified, as notification destination candidates, from among the mobile communication terminals 300 with which the programmable display device 100 is communicable, based on the event information 124 (see Fig. 3). Because the notification destination candidate determination method was described with Fig. 3, description thereof will not be reiterated. The first determination unit 152 outputs the mobile communication terminals 300 determined as the notification destination candidates to the acquisition unit 153.

The acquisition unit 153 transmits an acquisition request for the current position to each mobile communication terminal 300 determined as a notification destination candidate by the first determination unit 152, and acquires the current position from each mobile communication terminal 300. Various methods can be adopted as the current position detection method performed by the mobile communication terminal 300.

In one aspect, the mobile communication terminal 300 acquires the current position based on a satellite positioning signal received by a GPS (Global Positioning System) module 306 (see Fig. 7) which will be discussed later. In another aspect, the mobile communication terminal 300 acquires the current position using a communication technology such as BLTE (Bluetooth Low Energy) or WiFi (Wireless Fidelity). An identifier (e.g., SSID: Service Set Identifier) of a communication device such as a WiFi access point is included in a signal transmitted from the communication device. The mobile communication terminal 300 holds in advance communication device information that defines the installation location of each communication device, and specifies the installation location corresponding to the identifier received from a communication device from among the installation locations defined in the communication device information. On the other hand, the mobile communication terminal 300 calculates the distance from the installation location, based on the strength of the signal received from the communication device. The mobile communication terminal 300 calculates its own current position, based on the installation location of the communication device and the distance from the installation location.

The acquisition unit 153 outputs the current positions received from the mobile communication terminals 300 that are the notification destination candidates to the calculation unit 154. At this time, the acquired current positions may be written to a company database or the like.

The calculation unit 154 calculates the "apparatus - terminal" distance from the production apparatus 10 to each mobile communication terminal 300 that is a notification destination candidate, based on the current position of the mobile communication terminal 300 that is a notification destination candidate and an installation position 126 of the production apparatus 10. The installation position 126 may be defined in advance or may be set at the time of installation or the like. The "apparatus - terminal" distance is, for example, represented by the linear distance between the production apparatus 10 and the mobile communication terminal 300. The calculation unit 154 outputs the calculated "apparatus - terminal" distances to the second determination unit 155.

The second determination unit 155 determines a mobile communication terminal 300 whose "apparatus - terminal" distance is relatively short as the notification destination of the event, from among the mobile communication terminals 300 that are the notification destination candidates. Preferably, the second determination unit 155 determines the mobile communication terminal 300 whose "apparatus - terminal" distance is shortest as the notification destination of the event. The second determination unit 155 outputs the mobile communication terminal 300 determined as the notification destination to the communication unit 156.

The communication unit 156 transmits a warning indicating that an event to be notified has occurred to the mobile communication terminal 300 determined as the notification destination by the second determination unit 155.

### D. Warning screen of mobile communication terminal 300

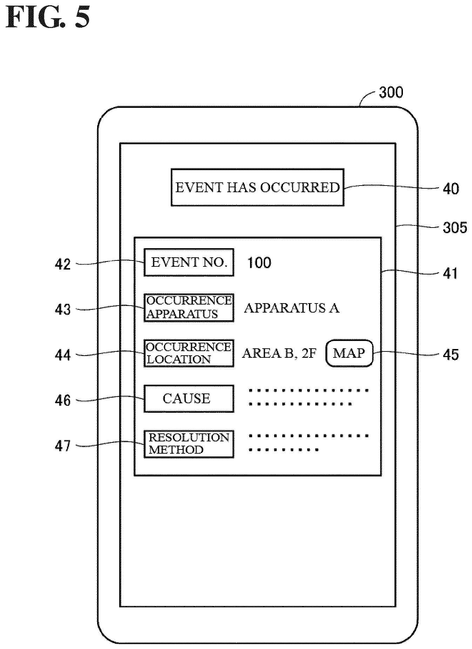

The mobile communication terminal 300 displays a warning screen, based on having received an event indicating that the production apparatus 10 has malfunctioned from the programmable display device 100. Fig. 5 is a diagram showing an example of the warning screen that is displayed on a display 305 of the mobile communication terminal 300.

The display 305 displays, for example, a message 40 indicating that an event has occurred in the production apparatus 10 and detailed information 41 of the event as a warning screen. The detailed information 41 includes event identification information 42 indicating the type of event, apparatus identification information 43 for identifying the production apparatus 10 in which the event has occurred, occurrence location 44 of the event, a map button 45, an occurrence cause 46 of the event, and a resolution method 47 of the malfunction shown by the event.

The event identification information 42 may be represented by an identification number of the event, or may be represented by an event name. The apparatus identification information 43 may be represented by an identification number of the production apparatus 10, or may be represented by a device name of the production apparatus 10.

Based on the repair person having pressed the map button 45, the mobile communication terminal 300 displays the installation position 126 (see Fig. 4) of the production apparatus 10 in which the event has occurred on a map image. The map image may be stored in advance or may be downloaded from a map site or the like. The repair person is able to immediately head to the place of the production apparatus 10, by checking the production apparatus 10 on the map image. As a result, the repair person is able to quickly deal with the malfunction of the production apparatus 10.

### E. Control structure of programmable display device 100

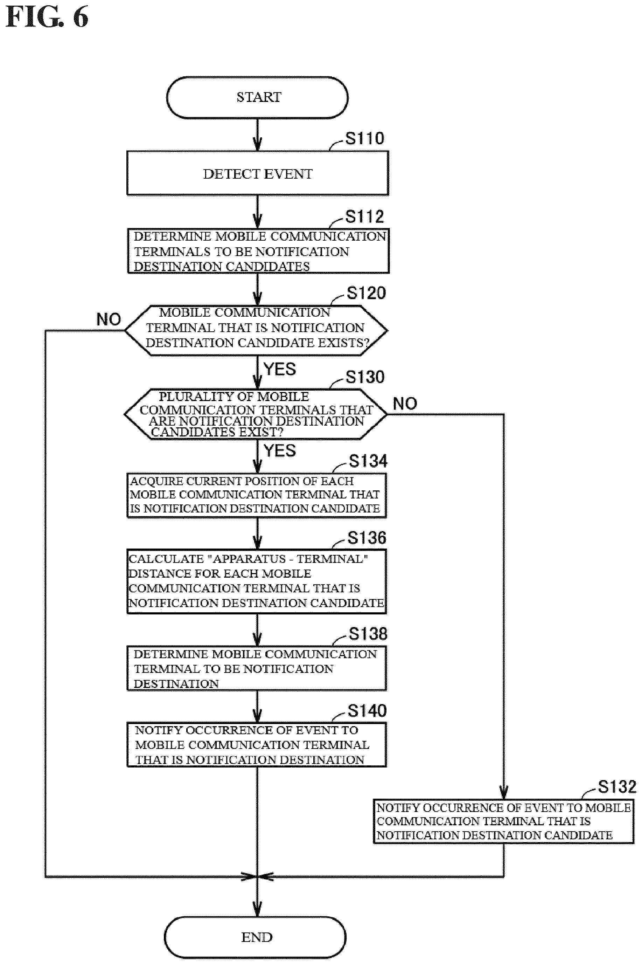

The control structure of the programmable display device 100 will be described, with reference to Fig. 6. Fig. 6 is a flowchart representing part of processing that is executed by the programmable display device 100. The processing of Fig. 6 is realized by the control device 101 (see Fig. 7) of the programmable display device 100 executing a program. In another aspect, part or all of the processing may be executed by a circuit element or other hardware.

In step S110, the control device 101, as the abovementioned detection unit 151 (see Fig. 4), monitors events that occur in the production apparatus 10, and detects an event to be notified.

In step S112, the control device 101, as the abovementioned first determination unit 152 (see Fig. 4), determines mobile communication terminals 300 that are associated with the event detected at step S110 as notification destination candidates, based on the event information 124 (see Fig. 3).

In step S120, the control device 101 judges whether there is a mobile communication terminal 300 that is a notification destination candidate. The control device 101, in the case where it is judged that there is a mobile communication terminal 300 that is a notification destination candidate (YES in step S120), switches control to step S130. If this is not the case (NO in step S120), the control device 101 ends the processing shown in Fig. 6.

In step S130, the control device 101 judges whether there are a plurality of mobile communication terminals 300 that are the notification destination candidates. The control device 101, in the case where it is judged that there are a plurality of mobile communication terminals 300 that are the notification destination candidates (YES in step S130), changes control to step S134. If this is not the case (NO in step S130), the control device 101 switches control to step S132.

In step S132, the control device 101, as the abovementioned communication unit 156 (see Fig. 4), notifies the occurrence of the event to the mobile communication terminal 300 determined as the notification destination candidate at step S112.

In step S134, the control device 101, as the abovementioned acquisition unit 153 (see Fig. 4), transmits an acquisition request for the current position to each mobile communication terminal 300 determined as a notification destination candidate, and acquires the current position from each of these mobile communication terminals 300.

In step S136, the control device 101, as the abovementioned calculation unit 154 (see Fig. 4), calculates the "apparatus - terminal" distance from the production apparatus 10 to each mobile communication terminal 300, based on the current position of the mobile communication terminal 300 that is a notification destination candidate and the abovementioned installation position 126 (see Fig. 4) of the programmable display device 100.

In step S138, the control device 101, as the second determination unit 155 (see Fig. 4), determines a mobile communication terminal 300 whose "apparatus - terminal" distance is relatively short as the notification destination of the event, from among the mobile communication terminals that are the notification destination candidates. Preferably, the control device 101 determines the mobile communication terminal whose "apparatus - terminal" distance is shortest as the notification destination of the event.

In step S140, the control device 101, as the communication unit 156 (see Fig. 4), transmits a warning indicating that an event to be notified has occurred to the mobile communication terminal 300 determined as the notification destination at step S138.

### F. Hardware structure of information processing system 1

An example of the hardware configuration of the information processing system 1 will be described, with reference to Fig. 7. Fig. 7 is a block diagram showing a main hardware configuration of the information processing system 1.

As shown in Fig. 7, the information processing system 1 is constituted by the programmable display device 100 and the mobile communication terminal 300. The programmable display device 100 and the mobile communication terminal 300 are network connected to each other.

Hereinafter, the hardware configurations of the programmable display device 100 and the mobile communication terminal 300 will be described in order.

### F1. Hardware configuration of programmable display device 100

As shown in Fig. 7, the programmable display device 100 is provided with a control device 101, a ROM (Read Only Memory) 102, a RAM (Random Access Memory) 103, a communication interface 104, a display 105, and a storage device 120.

The control device 101 controls the programmable display device 100. The control device 101 is, for example, constituted by at least one integrated circuit. The integrated circuit is, for example, constituted by at least one CPU (Central Processing Unit), at least one ASIC (Application Specific Integrated Circuit), at least one FPGA (Field Programmable Gate Array), or a combination thereof.

The control device 101 controls operations of the programmable display device 100 by executing various programs such as an information processing program 122 according to the present embodiment. The control device 101 reads out the information processing program 122 from the storage device 120 to the RAM 103, based on having received an execution command for the information processing program 122. The RAM 103 functions as a work memory and temporarily stores various data required in execution of the information processing program 122.

An antenna (not shown) or the like is connected to the communication interface 104. The programmable display device 100 exchanges data with an external communication device via the antenna. The external communication device includes, for example, a mobile communication terminal 300, a server or the like. The programmable display device 100 may be configured to be able to download the information processing program 122 from a server or the like.

The display 105 is, for example, a liquid crystal display, an organic electroluminescence display or other display device. The display 105 has a touch panel arranged thereon, and accepts various operations on the production apparatus 10 in which the programmable display device 100 is mounted with touch operations.

The storage device 120 is, for example, a storage medium such as a hard disk, a flash memory or an external storage device. The storage device 120 stores the information processing program 122 according to the present embodiment, the event information 124 (see Fig. 3), the abovementioned installation position 126 (see Fig. 4), and the like. The storage location of the information processing program 122, the event information 124 and the installation position 126 is not limited to the storage device 120, and may be a storage area (e.g., cache memory, etc.) of the control device 101, the ROM 102, the RAM 103, an external apparatus (e.g., mobile communication terminal 300), or the like.

Note that the information processing program 122 may be provided as a combination of the parts of suitable programs, rather than as a single program. In this case, processing according to the present embodiment is realized in cooperation with a suitable program. Even with a program that does not include a module of such a part, this does not depart from the gist of the information processing program 122 according to the present embodiment. Furthermore, part or all of the functions that are provided by the information processing program 122 may be realized by dedicated hardware. Furthermore, the programmable display device 100 and the mobile communication terminal 300 may be configured to execute the information processing program 122 in cooperation with each other. Furthermore, the programmable display device 100 may be constituted in the form of a so-called cloud service in which one server executes at least part of the processing of the information processing program 122.

### F2. Hardware configuration of mobile communication terminal 300

Next, the hardware configuration of the mobile communication terminal 300 will be described, with reference to Fig. 7.

The mobile communication terminal 300 includes a control device 301, a ROM 302, a RAM 303, a communication interface 304, the display 305, a GPS module 306, and a storage device 320.

The control device 301 controls the mobile communication terminal 300. The control device 301 is, for example, constituted by at least one integrated circuit. The integrated circuit is, for example, constituted by at least one CPU, at least one ASIC, at least one FPGA, or a combination thereof.

The control device 301 controls the mobile communication terminal 300 by executing various programs such as a display program 322 for displaying the warning screen shown in Fig. 5. The control device 301 reads out the display program 322 from the storage device 320 to the RAM 103, based on having received an execution command for the display program 322. The RAM 303 functions as a work memory and temporarily stores various data required for execution of the display program 322.

An antenna (not shown) or the like is connected to the communication interface 304. The mobile communication terminal 300 exchanges data with an external communication device via the antenna. The external communication device includes, for example, the programmable display device 100, a server or the like. The mobile communication terminal 300 may be configured to be able to download the display program 322 from a server via the antenna.

The display 305 is, for example, a liquid crystal display, an organic electroluminescence display or other display device. The display 305 has a touch panel arranged thereon, and accepts various operations on the mobile communication terminal 300 with touch operations. The display 305 displays the warning screen shown in Fig. 5 and the like.

The GPS module 306 receives radio waves from each of a plurality of satellites via the antenna (not shown) of the mobile communication terminal 300. The GPS module 306 detects the current position of the mobile communication terminal 300, based on the time period from when the radio waves are transmitted from each satellite until when the radio waves are received. The current position is, for example, represented by latitude and longitude.

The storage device 320 is, for example, a storage medium such as an eMMC (Embedded MultiMedia Card) or a flash memory. The storage device 320 stores the display program 322 and the like. The storage location of the display program 322 is not limited to the storage device 320, and may, for example, be a cache memory of the control device 301, the ROM 302, the RAM 303, or other communication device (e.g., programmable display device 100).

### G. Summary of first embodiment

As a result of adopting the above configuration, the programmable display device 100 according the present embodiment, based on an event to be notified having occurred in the production apparatus 10, determines mobile communication terminals 300 that are associated with the event to be notified, as notification destination candidates, from among the communicable mobile communication terminals 300. The programmable display device 100 calculates the "apparatus - terminal" distance from the production apparatus 10 to each mobile communication terminal 300 that is a notification destination candidate. The programmable display device 100 determines a mobile communication terminal 300 whose "apparatus - terminal" distance is relatively short as the notification destination of the event from among the mobile communication terminals 300 that are the notification destination candidates, and notifies the occurrence of the event to that mobile communication terminal 300.

The programmable display device 100 is thereby able to notify the occurrence of the event to a repair person who is near the production apparatus 10. As a result, the repair person is able to quickly deal with the malfunction of the production apparatus 10. Also, because the programmable display device 100 does not transmit notification of the occurrence of the event to a repair person who is not able to deal with the malfunction of the production apparatus 10 or to a repair person who is far away from the production apparatus 10, interruption to the work of these repair persons can be suppressed.

### Second Embodiment

### A. Outline

Depending on the type of malfunction of the production apparatus 10, a dedicated repair member such as a repair tool, a jig or a maintenance member may be required. In the case where the repair member is located away from the production apparatus 10, the repair person will head to the place of the production apparatus 10, after going via where the repair member is located. In such a case, it is preferable to notify the occurrence of the malfunction to a repair person who is near the via location.

Focusing on this point, the programmable display device 100 according to the second embodiment changes the logic for determining the notification destination of the event, according to whether it is necessary for the repair person to go via a predetermined location, in the case where an event to be notified occurs in the production apparatus 10. More specifically, the programmable display device 100, in the case where the repair person does not need to go via a predetermined location, calculates the time period (i.e., "apparatus - terminal" distance) for each mobile communication terminal 300 that is a notification destination candidate to reach the production apparatus 10, and determines a mobile communication terminal 300 whose time period is relatively short as the notification destination of the event, similarly to the first embodiment. On the other hand, the programmable display device 100, in the case where the repair person needs to go via a predetermined location in order to deal with the event that has occurred, calculates a time period (second time period) for each mobile communication terminal 300 that is a notification destination candidate to reach the production apparatus 10 via the via point, based on the current position of the mobile communication terminal 300 that is a notification destination candidate and the via point, and determines a mobile communication terminal 300 whose time period is relatively short as the notification destination of the event. Typically, the time period for the mobile communication terminal 300 to reach the production apparatus 10 via the via point is represented by the distance between the mobile communication terminal 300 and the via point, the distance for the mobile communication terminal 300 to reach the production apparatus 10 via the via point, or another index. Hereinafter, description will be given assuming that the distance (hereinafter, "apparatus - via point - terminal" distance) for the mobile communication terminal 300 to reach the production apparatus 10 via the via point is employed as the index indicating the length of the arrival time period.

As a result of the event being notified to a repair person whose "apparatus - via point - terminal" distance is short, the repair person is able to promptly arrive at the production apparatus 10, and is able to quickly repair the production apparatus 10.

Because the programmable display device 100 according to the second embodiment is the same as the programmable display device 100 according to the first embodiment with regard to other points, description thereof will not be reiterated below.

### B. Control structure of programmable display device 100

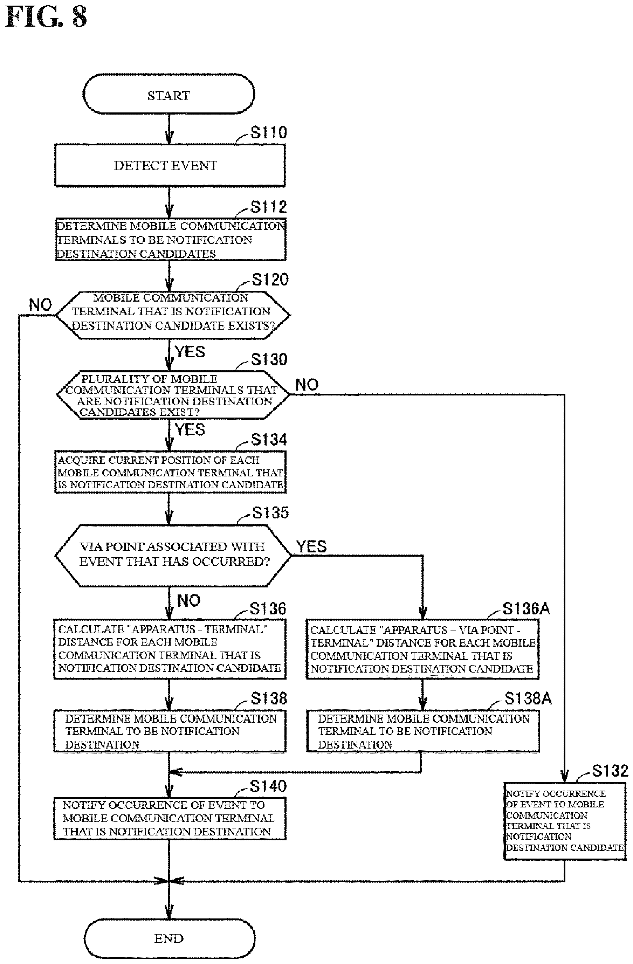

The control structure of the programmable display device 100 according to the second embodiment will be described, with reference to Fig. 8 to Fig. 10. Fig. 8 is a flowchart representing part of processing that is executed by the programmable display device 100 according to the second embodiment. The processing of Fig. 8 is realized by the control device 101 (see Fig. 7) of the programmable display device 100 executing a program. In another aspect, part or all of the processing may be executed by a circuit element or other hardware.

Note that because the processing other than steps S135, S136A and S138A shown in Fig. 8 is the same as the processing shown in the abovementioned Fig. 6, description thereof will not be reiterated below.

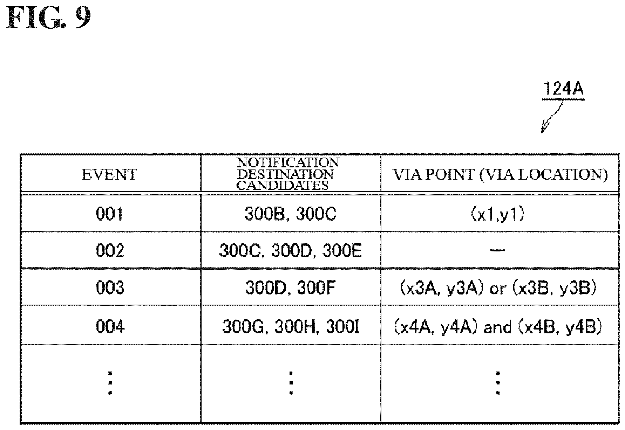

In step S135, the control device 101 judges whether a dedicated repair member is required in order to deal with the event to be notified. It is judged whether a repair member is required, based on event information 124A shown in Fig. 9, for example. Fig. 9 is a diagram showing an example of the data structure of the event information 124A according to the second embodiment.

In the second embodiment, the via point that a repair person is expected to go via in order to deal with an event is associated with at least one event that is defined in the event information 124A. The via point is, for example, represented by latitude and longitude. The via point is, for example, where the dedicated repair member that is required in order to deal with the event is located. With regard to points other than the via point being associated, the event information 124A is the same as the event information 124 (see Fig. 3) in the first embodiment.

In the case where a via point is associated with the event to be notified, the control device 101 judges that the repair person needs to go via the via point in order to deal with the event to be notified. The control device 101 switches control to step S136A, if it is judged that the via point is associated with the event to be notified (YES in step S135). If this is not the case (NO in step S135), the control device 101 switch control to step S136.

In step S136A, the control device 101, as the abovementioned calculation unit 154 (see Fig. 4), calculates the "apparatus - via point - terminal" distance for each mobile communication terminal 300 that is a notification destination candidate, based on the current position and the via point of the mobile communication terminal 300 that is a notification destination candidate.

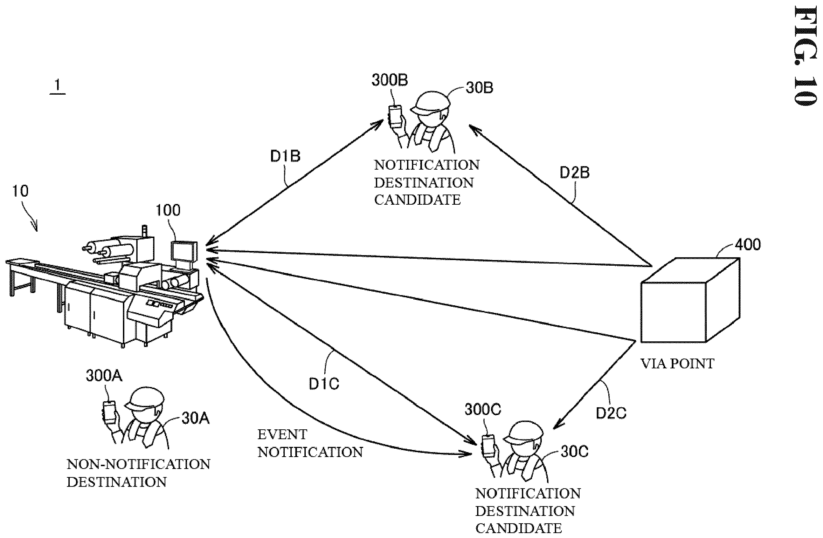

Fig. 10 is a diagram showing "apparatus - via point - terminal" distances representing the distances between the programmable display device 100 and the mobile communication terminals 300B and 300C. In the case where the mobile communication terminals 300B and 300C are notification destination candidates, the control device 101 calculates an "apparatus - via point - terminal" distance D2B from the mobile communication terminal 300B to the production apparatus 10 via the via point 400, and an "apparatus - via point - terminal" distance D2C from the mobile communication terminal 300C to the production apparatus 10 via the via point 400.

In step S138A, the control device 101, as the abovementioned second determination unit 155 (see Fig. 4), determines a mobile communication terminal 300 whose "apparatus - via point - terminal" distance is relatively short as the notification destination of the event. In the example in Fig. 10, the control device 101 determines mobile communication terminal 300C whose "apparatus - via point - terminal" distance D2C is shorter as the notification destination of the event.

Note that although description was given above assuming that there is one via point, there may be a plurality of via points. As an example, two via points (x3A, y3A) and (x3B, y3B), one of which is to be passed via, are associated with an event "003" of the event information 124A (see Fig. 9). In this case, when the event "003" is detected, the control device 101 calculates the distance from each mobile communication terminal 300 that is a notification destination candidate to the production apparatus 10 passing via the via point (x3A, y3A) and the distance from each mobile communication terminal 300 that is a notification destination candidate to the production apparatus 10 passing via the via point (x3B, y3B), and determines a mobile communication terminal 300 whose calculated distance is relatively short as the notification destination of the event.

Also, two via points (x4A, y4A) and (x4B, y4B), both of which need to be passed via, are associated with an event "004" of the event information 124A. In this case, if the event "004" occurs, the control device 101 determines the mobile communication terminal 300 of the repair person who can pass via the two via points (x4B, y4B) and (x4A, y4A) in a short time as the notification destination of the event. That is, the control device 101 calculates the sum of the distance from the mobile communication terminal 300 to one of the via points (x4A, y4A) and (x4B, y4B), the distance from the one via point to the other via point, and the distance from the other via point to the programmable display device 100 for each mobile communication terminal 300 that is a notification destination candidate, and determines a mobile communication terminal 300 whose calculated distance is relatively short as the notification destination of the event.

### C. Summary of the second embodiment

As a result of adopting this configuration, the programmable display device 100 according to the second embodiment, in the case where a via point is not associated with the event to be notified in the event information 124A, calculates the "apparatus - terminal" distance (first distance) for each mobile communication terminal 300 that is a notification destination candidate, based on the current position of the mobile communication terminal 300 that is a notification destination candidate and the installation location of the production apparatus 10. In this case, the programmable display device 100 determines the mobile communication terminal whose "apparatus - terminal" distance is relatively short as the notification destination of the event, from among the mobile communication terminals that are the notification destination candidates.

On the other hand, the programmable display device 100, in the case where a via point is associated with the event to be notified in the event information 124A, calculates the "apparatus - via point - terminal" distance for each mobile communication terminal that is a notification destination candidate, based on the current position of the mobile communication terminal that is a notification destination candidate and the via point. In this case, the programmable display device 100 determines the mobile communication terminal whose "apparatus - via point - terminal" distance is relatively short as the notification destination of the event from among the mobile communication terminals that are the notification destination candidates.

The repair person who receives the notification is thereby able to arrive at the production apparatus 10 with the shortest distance covered, and is able to quickly repair the production apparatus 10.

### Third Embodiment

### A. Outline

As mentioned above, the mobile communication terminal 300 displays a warning screen, based on having received an event indicating that the production apparatus 10 has malfunctioned from the programmable display device 100. At this time, in the third embodiment, the mobile communication terminal 300 further displays the contact number of a repair person who has previously dealt with the malfunction of the production apparatus 10. The repair person who receives the notification is thereby able to contact to an experienced person quickly, and is able to get advice or the like for repairing the production apparatus 10. As a result, the repair person is able to quickly repair the production apparatus 10.

Because the other points are as described in the "first embodiment", description thereof will not be reiterated below.

### B. Warning screen of mobile communication terminal 300

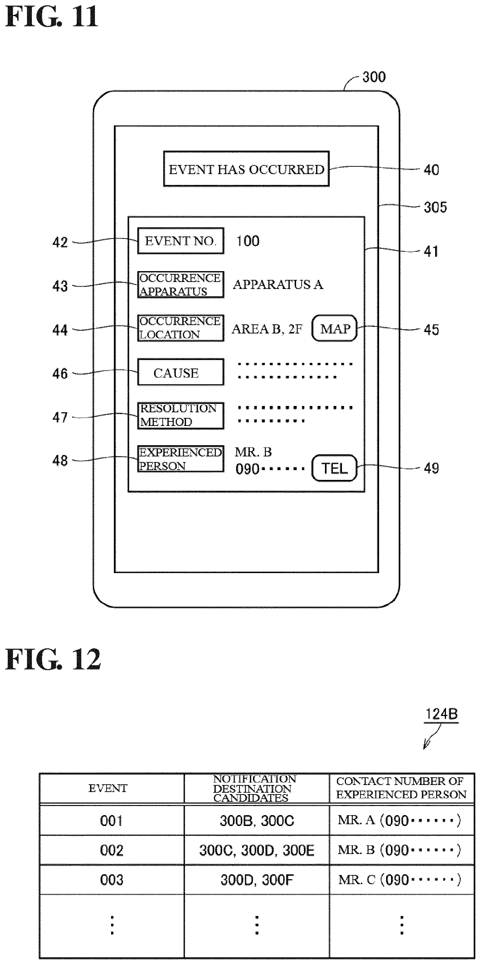

The warning screen that is displayed when the mobile communication terminal 300 according to the present embodiment receives notification of an event will be described, with reference to Fig. 11 and Fig. 12. Fig. 11 is a diagram showing an example of the warning screen that is displayed on the display 305 of the mobile communication terminal 300 according to the present embodiment.

As shown in Fig. 11, the display 305 displays, for example, the message 40 indicating that an event to be reported has occurred and the detailed information 41 of the event as a warning screen. The detailed information 41 further includes, in addition to the example in Fig. 5, a contact number 48 and a call button 49 for an experienced person who has previously dealt with the event that has currently occurred. The contact number of the experienced person is, for example, defined in event information 124B shown in Fig. 12. Fig. 12 is a diagram showing an example of the data structure of the event information 124B according to the third embodiment.

As shown in Fig. 12, the event information 124B defines a contact number of an experienced person who has dealt with each event in the past. The programmable display device 100, when notifying an event to be reported to a mobile communication terminal 300, transmits the contact number associated with the event in the event information 124B together with the warning indicating that the event has occurred to the mobile communication terminal 300 that is the notification destination. The mobile communication terminal 300 is thereby able to display the contact number of the experienced person who has previously dealt with the event that has currently occurred. The repair person is able to contact the experienced person, by pressing the call button 49.

### C. Summary of the third embodiment

As a result of adopting the above configuration, the mobile communication terminal 300 according to the third embodiment further displays the contact number of an experienced person who has previously dealt with the current event on an event notification screen. The repair person who receives the notification is thereby able to contact the experienced person quickly, and is able to get advice or the like for repairing the production apparatus 10. As a result, the repair person is able to quickly deal with the malfunction of the production apparatus 10.

### Fourth Embodiment

### A. Outline

In the case where the production apparatus 10 has malfunctioned, the repair person needs to carry out a visual check as to what has actually happened to the production apparatus 10 or needs to carry out a manual operation (e.g., reboot, etc.). In this case, when the contact number of a person who is in the vicinity of the production apparatus 10 is notified to the repair person, the repair person is able to request that person to carry out a visual check or an operation.

Focusing on this point, the programmable display device 100 according to the fourth embodiment, in the case where an event to be notified occurs in the production apparatus 10, calculates the "apparatus - terminal" distance for a mobile communication terminal 300 that is a notification destination candidate but also for a mobile communication terminal 300 that is a non-notification destination. The programmable display device 100 specifies a mobile communication terminal 300 whose "apparatus - terminal" distance is relatively short, from among all the communicable mobile communication terminals 300. The programmable display device 100, in the case where the specified mobile communication terminal 300 is a mobile communication terminal other than a notification destination candidate, transmits the contact number of the specified mobile communication terminal 300 to the mobile communication terminal 300 that is the notification destination of the event. The repair person who receives the notification is thereby able to request the person who is near the production apparatus 10 to carry out a visual check or an operation.

Because the other points are as described in the "first embodiment", description thereof will not be reiterated below.

### B. Warning screen of mobile communication terminal 300

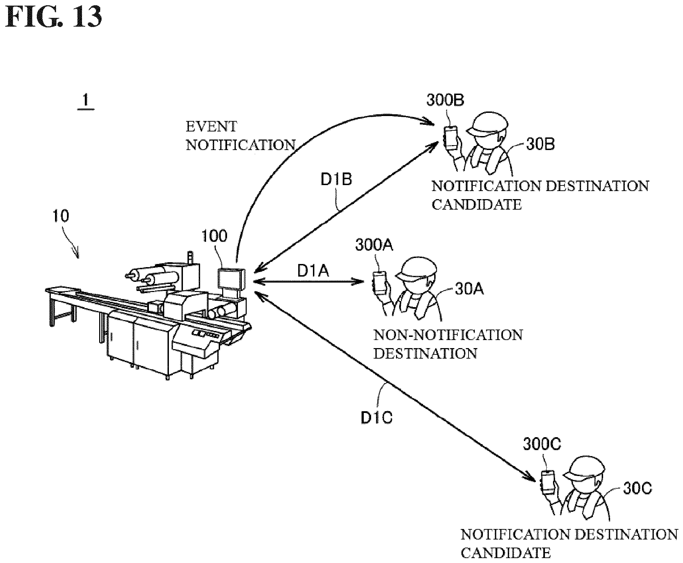

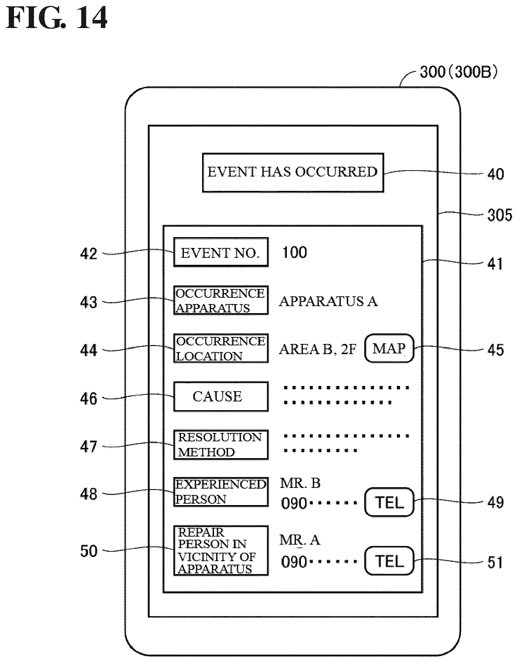

The warning screen that is displayed when the mobile communication terminal 300 according to the present embodiment receives notification of an event will be described, with reference to Fig. 13 and Fig. 14. Fig. 13 is a diagram showing "apparatus - terminal" distances representing the distance between the programmable display device 100 and the mobile communication terminals 300A to 300C.

As shown in Fig. 13, the programmable display device 100 according to the present embodiment calculates the "apparatus - terminal" distance for not only the mobile communication terminals 300B and 300C that are the notification destination candidates but for the mobile communication terminal 300A that is a non-notification destination. That is, the programmable display device 100 not only calculates the "apparatus - terminal" distances D1B and D1C from the production apparatus 10 to the mobile communication terminals 300B and 300C but also calculates an "apparatus - terminal" distance D1A from the production apparatus 10 to the mobile communication terminal 300A. The programmable display device 100 specifies the mobile communication terminal 300A whose "apparatus - terminal" distance D1A is shortest, from among the communicable mobile communication terminals 300A to 300C. The programmable display device 100 transmits the contact number of the specified mobile communication terminal 300A to the mobile communication terminal 300B together with a warning indicating that an event to be reported has occurred.

Fig. 14 is a diagram showing an example of a warning screen that is displayed on the display 305 of the mobile communication terminal 300B according to the fourth embodiment. As shown in Fig. 14, the display 305 displays, for example, the message 40 indicating that an event to be reported has occurred and the detailed information 41 of the event as a warning screen. The detailed information 41 further displays, in addition to the example in Fig. 11, a contact number 50 and a call button 51 of a person who is closest to the production apparatus 10. The contact number 50 is, for example, defined in advance in an address book or the like. The repair person is able to contact the person who is near the production apparatus 10, by pressing the call button 51.

Note that although an example in which the contact number 50 of one person who is near the production apparatus 10 is displayed was described above, the mobile communication terminal 300 may, in the case where a plurality of persons are within a given range from the production apparatus 10, display the contact numbers of the plurality of persons in list form.

Also, the mobile communication terminal 300 may display not only the contact number of a person who is near the production apparatus 10 but also a contact number having high importance. As an example, the contact number of a repair person such as a person on duty on that day, a manager of the apparatus or a factory manager is displayed as a contact number having high importance. The importance of the contact number may be set in advance or may be set arbitrarily. As a result of the contact number of the repair person being displayed, the repair person is able to immediately contact the repair person, and is able to leave the repair person to deal with the situation.

### C. Summary of the fourth embodiment

As a result of adopting the above configuration, the programmable display device 100 according to the present embodiment calculates the "apparatus - terminal" distance for not only a mobile communication terminal 300 that is targeted to be notified but also for a mobile communication terminal 300 that is not targeted to be notified. The programmable display device 100 specifies a mobile communication terminal 300 whose "apparatus - terminal" distance is relatively short, from among the communicable mobile communication terminals 300. The programmable display device 100, in the case where the specified mobile communication terminal 300 is not targeted to be notified, transmits the contact number of the specified mobile communication terminal 300 to the mobile communication terminal 300 that is the notification destination of the event. The mobile communication terminal 300 that receives the notification displays the contact number of a person who is near the production apparatus 10. The repair person who receives the notification is thereby able to request the person who is near the production apparatus 10 to carry out a visual check or an operation. As a result, the repair person is able to quickly deal with the malfunction of the production apparatus 10.

The disclosed embodiments are considered in all respects to be illustrative and not restrictive. The scope of the invention is indicated by the claims rather than by the foregoing description, and all changes that come within the meaning and range of equivalency of the claims are intended to be embraced therein.

## Claims

1. An information processing apparatus comprising:
a communication unit configured to communicate with a plurality of mobile communication terminals;
a detection unit for detecting an event indicating a phenomenon that has occurred in a production apparatus;
a first determination unit for determining, in a case where an event to be notified is detected by the detection unit, mobile communication terminals that are associated with the event to be notified, as notification destination candidates, from among the plurality of mobile communication terminals, based on event information defining, for every type of event, mobile communication terminals that are to be notification destinations of the event;
an acquisition unit for acquiring a current position of each of the mobile communication terminals that are the notification destination candidates;
a calculation unit for calculating a first time period for each of the mobile communication terminals that are the notification destination candidates to reach the production apparatus, based on the respective current positions of the mobile communication terminals that are the notification destination candidates and an installation position of the production apparatus; and
a second determination unit for determining a mobile communication terminal whose calculated first time period is relatively short, as a notification destination of the event to be notified, from among the mobile communication terminals that are the notification destination candidates.

2. The information processing apparatus according to claim 1,
wherein the second determination unit determines a mobile communication terminal whose calculated first time period is shortest as the notification destination, from among the mobile communication terminals that are the notification destination candidates.

3. The information processing apparatus according to claim 1 or 2,
wherein a via point is further associated with at least one event defined in the event information,
the calculation unit, in a case where the via point is not associated with the event to be notified, calculates the first time period, and, in a case where the via point is associated with the event to be notified, calculates a second time period for each of the mobile communication terminals that are the notification destination candidates to reach the production apparatus via the via point, based on the respective current positions of the mobile communication terminals that are the notification destination candidates and the via point, and
the second determination unit, in a case where the via point is not associated with the event to be notified, determines a mobile communication terminal whose calculated first time period is relatively short as the notification destination, from among the mobile communication terminals that are the notification destination candidates, and, in a case where the via point is associated with the event to be notified, determines a mobile communication terminal whose calculated second time period is relatively short as the notification destination.

4. The information processing apparatus according to any of claims 1 to 3,
wherein the event information further defines a contact number of a repair person for every type of event, and
the communication unit transmits a warning indicating that the event to be notified has occurred and the contact number associated with the event to be notified in the event information to the mobile communication terminal that is the notification destination.

5. The information processing apparatus according to any of claims 1 to 4,
wherein the calculation unit further calculates a first time period for each of the mobile communication terminals that are other than the notification destination candidates to reach the production apparatus, out of the plurality of mobile communication terminals, based on the respective current positions of the mobile communication terminals that are other than the notification destination candidates and the installation position of the production apparatus, and
the communication unit specifies a mobile communication terminal whose calculated first time period is relatively short, from among the plurality of mobile communication terminals that include the mobile communication terminals that are other than the notification destination candidates, and, in a case where the specified mobile communication terminal is a mobile communication terminal that is other than the notification destination candidates, transmits the contact number of the specified mobile communication terminal to the mobile communication terminal that is the notification destination.

6. An information processing system including an information processing apparatus, comprising:
a communication unit configured to communicate with a plurality of mobile communication terminals;
a detection unit for detecting an event indicating a phenomenon that has occurred in a production apparatus;
a first determination unit for determining, in a case where an event to be notified is detected by the detection unit, mobile communication terminals that are associated with the event to be notified, as notification destination candidates, from among the plurality of mobile communication terminals, based on event information defining, for every type of event, mobile communication terminals that are to be notification destinations of the event;
an acquisition unit for acquiring a current position of each of the mobile communication terminals that are the notification destination candidates;
a calculation unit for calculating a time period for each of the mobile communication terminals that are the notification destination candidates to reach the production apparatus, based on the respective current positions of the mobile communication terminals that are the notification destination candidates and an installation position of the production apparatus; and
a second determination unit for determining a mobile communication terminal whose calculated time period is relatively short, as a notification destination of the event to be notified, from among the mobile communication terminals that are the notification destination candidates.

7. An information processing method of an information processing apparatus configured to communicate with a plurality of mobile communication terminals, comprising:
a step of detecting an event indicating a phenomenon that has occurred in a production apparatus;
a step of determining, in a case where an event to be notified is detected in the detection step, mobile communication terminals that are associated with the event to be notified, as notification destination candidates, from among the plurality of mobile communication terminals, based on event information defining, for every type of event, mobile communication terminals that are to be notification destinations of the event;
a step of acquiring a current position of each of the mobile communication terminals that are the notification destination candidates;
a step of calculating a time period for each of the mobile communication terminals that are the notification destination candidates to reach the production apparatus, based on the respective current positions of the mobile communication terminals that are the notification destination candidates and an installation position of the production apparatus; and
a step of determining a mobile communication terminal whose calculated time period is relatively short, as a notification destination of the event to be notified, from among the mobile communication terminals that are the notification destination candidates.

8. An information processing program that is executed by an information processing apparatus configured to communicate with a plurality of mobile communication terminals, the information processing program causing the information processing apparatus to execute:
a step of detecting an event indicating a phenomenon that has occurred in a production apparatus;
a step of determining, in a case where an event to be notified is detected in the detection step, mobile communication terminals that are associated with the event to be notified, as notification destination candidates, from among the plurality of mobile communication terminals, based on event information defining, for every type of event, mobile communication terminals that are to be notification destinations of the event;
a step of acquiring a current position of each of the mobile communication terminals that are the notification destination candidates;
a step of calculating a time period for each of the mobile communication terminals that are the notification destination candidates to reach the production apparatus, based on the respective current positions of the mobile communication terminals that are the notification destination candidates and an installation position of the production apparatus; and
a step of determining a mobile communication terminal whose calculated time period is relatively short, as a notification destination of the event to be notified, from among the mobile communication terminals that are the notification destination candidates.
